# EUROPEAN PATENT SPECIFICATION

(11) **EP 2 363 949 B1**
(45) Date of publication and mention of the grant of the patent: **29.07.2020**
(21) Application number: 11153619.9
(22) Date of filing: 08.02.2011
(51) Int. Cl.: H02P 1/46, H02P 6/20, H02M 1/32

(54) **Motor device and pump equipped with the same**
Motorvorrichtung und damit ausgerüstete Pumpe
Dispositif de moteur et pompe équipée de celui-ci

(30) Priority: 24.02.2010 JP 2010039164
(43) Date of publication of application: 07.09.2011
(73) Proprietor: Panasonic Corporation, Osaka 571-8501 (JP)
(72) Inventor: Kinoshita, Koji, Kadoma-shi Osaka 571-8686 (JP); Mie, Masatoshi, Kadoma-shi Osaka 571-8686 (JP)
(74) Representative: Appelt, Christian W.

(56) References cited:
- JP-A- 2007 318 921
- Ward Brown: "Brushless DC Motor Control Made Easy AN857", , 31 December 2002 (2002-12-31), XP055203249, Retrieved from the Internet: URL:http://ww1.microchip.com/downloads/en/ AppNotes/00857B.pdf [retrieved on 2015-07-17]
- "PIC16F87X Datasheet", , 31 December 1998 (1998-12-31), pages 1-218, XP055203245, Retrieved from the Internet: URL:http://ww1.microchip.com/downloads/en/ DeviceDoc/30292D.pdf [retrieved on 2015-07-17]
- Anonymous: "Brushless DC Motor Control Made Easy", , 31 December 2002 (2002-12-31), XP055598515, Retrieved from the Internet: URL:https://datasheet.datasheetarchive.com /originals/library/Datasheet-02/DSA0026430 .pdf [retrieved on 2019-06-21]
- Anonymous: "PIC16F87X Data Sheet 28/40-Pin 8-Bit CMOS FLASH Microcontrollers", , 31 December 2001 (2001-12-31), XP055598509, Retrieved from the Internet: URL:http://ww1.microchip.com/downloads/en/ devicedoc/30292c.pdf [retrieved on 2019-06-21]

## Description

### Technical Field

The invention relates to a motor device and a pump equipped with the motor device.

### Background Art

An existing motor device is configured to drive a switching device and a stator by (electric) power supplied from an external power supply. The switching device is provided with energization control by a control signal output from a controller. Japanese Patent Application Publication No. 2006-254555 discloses a voltage detector for detecting voltage of power supplied to a switching device and a signal transmission permitting means for permitting transmission of the control signal to the switching device when voltage is detected.

In this one, the presence of power supplied to the switching device is judged with the voltage detector and the signal transmission permitting means. The control signal is supplied to the switching device only in a state that power is supplied to the switching device, thereby reducing the burden of the switching device by suppressing increase of an inrush current caused by power supply to the switching device that is receiving the control signal.

However, in the existing motor device, the voltage detector is arranged between the external power supply and the switching device, and accordingly there is a problem that power consumption of the voltage detector becomes large power of about several hundred mW. Even in a standby state that the stator is not driven, it detects the voltage of the power supplied to the switching device, therefore also increasing power consumption in the standby state.

JP 2007 318921 A discloses a semiconductor device for driving a motor, a motor, a motor driving device, and an air-condition comprising it. The semiconductor device for driving a motor includes six switching elements that drive a three-phase motor, three output terminals that supply an output voltage to each of three terminals of the coils of the three-phase motor, a drive circuit that drives the six switching elements, and six control-signal input terminals that input six control signals that control the ON/OFF of each of the six switching elements. This semiconductor device comprises at least one semiconductor chip sealed with a resin into one package, and includes a dead time generation function that generates a dead time for the six control signals.

The document Ward Brown: "Brushless DC motor control made easy", XP055598515, 31 December 2002 describes the anatomy of a BLDC, sensored commutation, the sensorless motor control, determining the BEMF, open and closed loop speed control, acceleration and deceleration delay, determining the commutation time table values, using open loop control to determine motor characteristics, and constructing the sensorless control code.

The document Anonymous: "PIC16F87X data sheet 28/40-pin 8-bit CMOS FLASH microcontrollers", XP055598509, 31 December 2001 describes Capture/Compare/PWM modules, a Master Synchronous Serial Port, MSSP, module, an Addressable Universal Synchronous Asynchronous Receiver Transmitter, USART, and an A/D module.

### Summary of Invention

Therefore, the present invention is provided in view of the above premises described above, and an object is to provide a motor device configured to reduce the burden of a switching device by an inrush current and also to reduce power consumption in comparison with an existing device as well as a pump equipped with the motor device.

The object of the present application is solved by the independent claim 1. Advantageous embodiments are described by the dependent claims. In order to solve the problem, a motor device of the present invention comprises: a rotor; a stator configured to drive the rotor; a switching device which external power is supplied to and configured to energize the stator; and a controller configured to output a control signal for performing energization control through the switching device in accordance with a command signal from the outside. That is, the controller supplies the control signal to the switching device to control its switching, thereby performing energization control with respect to the stator though the switching device. Power supply voltage supplied to the controller from the outside and regulated voltage from the controller are lower than voltage of the power supplied to the switching device. The motor device further comprises: a voltage detector configured to detect at least one of the power supply voltage and the regulated voltage; and a signal transmission permitting means configured to permit transmission of the control signal to the switching device when voltage is detected through the voltage detector.

In an embodiment, the signal transmission permitting means is built in the controller.

In an embodiment, the voltage detector is configured to supply a enabling signal to the signal transmission permitting means when (if) detecting voltage. The motor device also comprises a signal delay unit configured to delay and transmit at least any one of the command signal, the control signal and the enabling signal.

A pump of the present invention comprises the above motor device as a drive source of an impeller.

According to the above configuration, it is possible to prevent the switching device from generating a large inrush current when it is receiving a control signal, thereby reducing the burden of the switching device. Since the voltage detector detects any of the power supply voltage for the controller and the regulated voltage of the controller, it is possible to reduce power consumption in the voltage detector in comparison with an existing device.

### Brief Description of Drawings

Preferred embodiments of the invention will now be described in further details. Other features and advantages of the present invention will become better understood with regard to the following detailed description and accompanying drawings where:
FIG. 1 is a circuit diagram for explanation of control signal transmission in a motor device of an embodiment - an example;
FIG. 2 is a circuit diagram for explanation of control signal transmission in another example;
FIG. 3 is a circuit diagram for explanation of control signal transmission in a modified example;
FIG. 4 is a circuit diagram for explanation of control signal transmission in an example obtained by adding a signal delay unit to the example of FIG. 2;
FIG. 5 illustrates a comparison chart between the example of FIG. 4 and a prior art, FIG 5A is an explanatory diagram of an inrush current in the example of FIG. 4 and FIG. 5B is an explanatory diagram of an inrush current in the prior art;
FIG. 6 is a circuit diagram for explanation of control signal transmission in another example obtained by adding a signal delay unit; and
FIG. 7 is a sectional view of a pump equipped with a motor device shown in FIGS. 1-6 as a drive source.

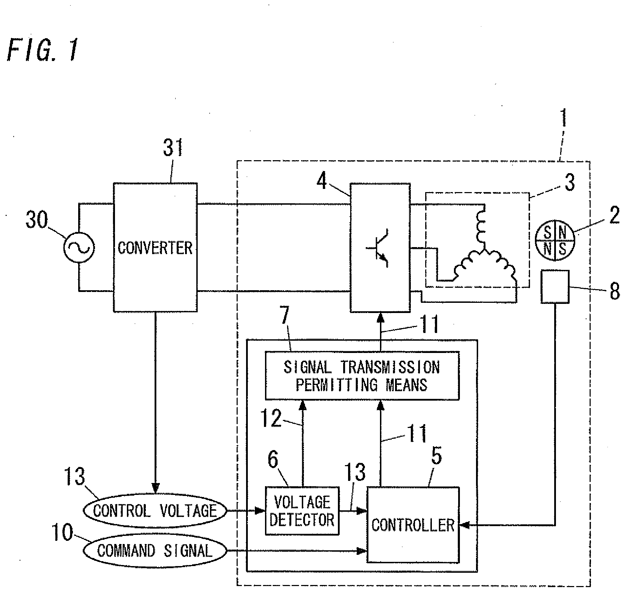

The example shown in FIG. 1 is presented not as an embodiment of the invention but as background art that is useful for understanding the invention.

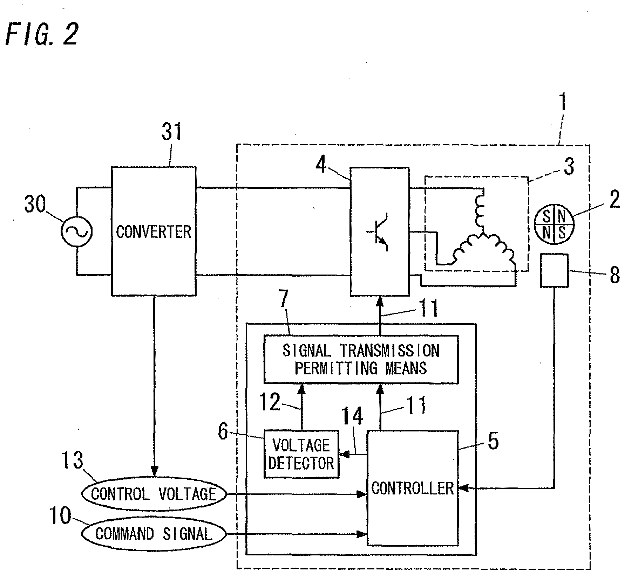

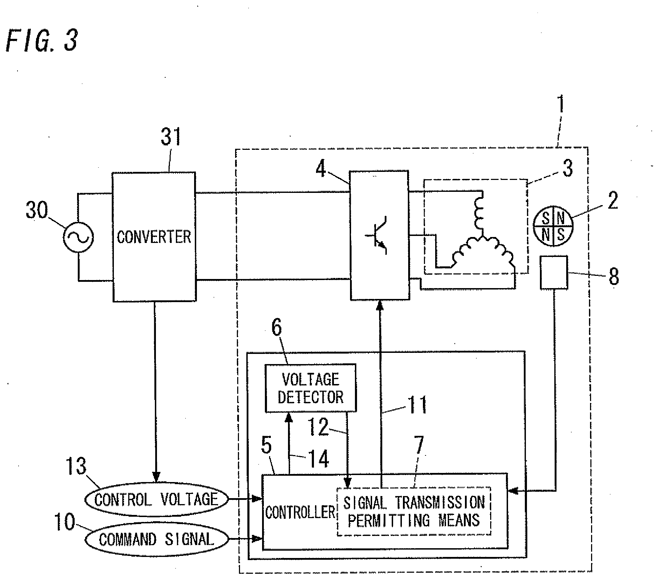

The examples shown in the FIGs. 2 and 4 to 7, and the modified example shown in FIG. 3 relate to embodiments of the invention.

### Description of Embodiments

An embodiment - an example is explained with reference to drawings, as follows.

For example, as shown in FIG. 1, a motor device 1 has a rotor 2 made of magnet or the like, a stator 3 formed of an electric magnet or the like for driving the rotor 2, a switching device 4 for supplying power to the stator 3 through switching operation, and a controller 5 configured to perform energization control with respect to the stator 3 through the switching device 4. In FIG. 1, the rotor 2 and the stator 3 are illustrated as a three-phase brushless motor, but may be a brushless motor of single phase, two-phase half-wave or the like.

This motor device 1 is supplied with (electric) power through a converter 31 or the like from an external power supply 30 such as a commercial power supply or the like. The switching device 4 does not energize the stator 3 until receiving a control signal (e.g., speed control signal) 11 from the controller 5. When receiving the control signal 11, the switching device 4 supplies the stator 3 with power from the external power supply 30 through switching operation, thereby rotating and driving the rotor 2.

A position detector, denoted by 8 is a hall element or the like and is configured: to detect the position of the rotor 2 when the motor device 1 is driven; and to supply the controller 5 with the detected position information as a position signal. The controller 5 is configured to judge the presence of rotational drive and the rotational speed of the rotor 2 based on the received position signal. The motor device 1 may be sensorless and configured to detect the position of the rotor 2 based on a winding current or winding voltage of the stator 3.

First power and second power constitute the power supplied through the converter 31 or the like from the external power supply 30. The first power is supplied to the switching device 4. The second power has lower voltage than the first voltage and is supplied to the controller 5 through an external step-down unit (not shown) or the like. When the motor device 1 is electrically connected to the external power supply 30, the voltage of the first power is applied across the switching device 4. When a control signal 11 is supplied to the switching device 4 under the applied state from the controller 5, the first power is supplied to the stator 3 through the switching device 4, so that the rotor 2 is driven to rotate.

That is, the first power is main power for drive, which is used to drive the rotor 2 through the switching device 4 and the stator 3. The second power is sub-power for controlling the motor device 1, which is supplied to electronic components and electronic circuits of the controller 5 and the like when the motor device 1 is driven. In the example shown in FIG. 1, the electronic components and electronic circuits to which the second power is supplied are a voltage detector 6, a signal transmission permitting means 7, the position detector 8 and so on besides the controller 5.

The voltage of the first power is, for example, about DC 141 V (141 direct-current voltage) or about DC 282 V. The voltage of the second power is, for example, about DC 15 V. Regulated voltage 14 of the controller 5 receiving the second power, to be hereinafter described, is about DC 5 V. These voltage values are only examples. What is needed is that the voltage of the first power has a larger value than that of the voltage of the second power and the regulated voltage 14 of the controller 5, which are properly set in view of size, application or the like of the motor device 1.

The controller 5 is, for example, IC, control circuit or the like for controlling the motor (the rotor 2 and the stator 3) and configured to supply the switching device 4 with a control signal 11 for switching operation to perform energization control. The controller 5 outputs the control signal 11 when receiving a command signal (e.g., speed command signal) 10 from the outside. Herein, the command signal 10 is supplied to the controller 5, while almost at the same time the second power is supplied to the controller 5.

The controller 5 is also configured to continue outputting the control signal 11 until receiving a position signal from the position detector 8, a stop signal from the outside, or the like. The command signal 10 is output, while almost at the same time the second power is supplied to the controller 5, and then power feeding is continuously performed at least until the motor device 1 is unactivated.

The power feeding into the motor device 1 is not limited the instance configuration that the power from the same commercial power supply is divided into the first power and the second power through the converter 31 to be supplied. What is needed is that the second power is supplied after or while almost at the same time the first power is supplied. For example, if a direct-current power supply such as a secondary battery or the like is utilized as the external power supply 30, the converter 31 is unnecessary. The second power may be supplied as alternate current without the converter 31. The first power and the second power may be also supplied from different external power supplies 30, respectively. A command signal output means for outputting a command signal 10 is, for example, an external control means such as an arithmetic and control circuit, an information processing device or the like, or an external operational tool such as an operational button or an operational knob or the like for handling so as to turn on and off the rotation drive of the motor device 1 or to set the rotational speed of the device.

In the following explanation, the power supply voltage of the second power is referred to as control voltage 13 and distinguished from the voltage of the first power. A standby state is also defined as the state that the voltage of the first power is only applied to the switching device 4 but the control voltage 13 is not applied to the motor device 1. What is needed is that the standby state is the state that the switching device 4 does not energize the stator 3. Therefore, the standby state may be the state that power is supplied to each of the switching device 4 and the controller 5 and the controller 5 does not output a control signal 11 to be described.

The signal transmission permitting means 7 such as a transistor, an AND circuit or the like is arranged between the controller 5 and the switching device 4. A control signal 11 from the controller 5 is transmitted to the switching device 4 through the signal transmission permitting means 7. The signal transmission permitting means 7 is configured to permit transmission of a control signal 11 when receiving an enabling signal 12 from the voltage detector 6, and to cause the controller 5 not to transmit a control signal 11 to the switching device 4 until receiving the enabling signal 12.

The voltage detector 6 for outputting an enabling signal 12 is, for example, a comparator or the like configured to receive the second power, and configured to detect control voltage 13 to supply an enabling signal 12 to the signal transmission permitting means 7. Specifically, the detector is configured: to monitor fluctuation in the input voltage; and to judge that, when the voltage exceeds a predetermined value, voltage is detected and then to output an enabling signal 12. The fluctuation in the voltage may be judged based on the presence of input of the second power by using the predetermined value which is set to 0.

Thus, the signal transmission permitting means 7 does not permit transmission of a control signal 11 until the voltage detector 6 outputs an enabling signal 12. Therefore, when the second power is not supplied, the switching device 4 does not receive a control signal 11. The second power is separated from the converter 31 for supplying the first power and supplied to the voltage detector 6. Accordingly, when not receiving the first power, the motor device 1 does not receive the second power as well, so that the voltage detector 6 does not output an enabling signal 12.

That is, the voltage detector 6 detects supply of the first power to the switching device 4 by detecting the presence of the second power, and does not output an enabling signal 12 at least if the motor device 1 is in an standby state or the motor of the motor device 1 is not during operation. Therefore, a control signal 11 cannot be prevented from entering the switching device 4 across which the voltage of the first power is not applied, and the burden, caused by an inrush current, of the switching device 4 is reduced.

The voltage detector 6 outputs an enabling signal 12 when detecting control voltage 13. Therefore, the voltage detector 6 is not supplied with the voltage of the first power but supplied with the control voltage 13, and power consumption in the voltage detector 6 can be reduced in comparison with the aforementioned existing device. Especially, in the standby state, the second power is not supplied. Therefore, in the standby state, power consumption in the voltage detector 6 can be reduced to approximately 0.

In another example shown in FIG. 2, the voltage detector 6 is configured: to detect regulated voltage 14 supplied from the controller 5 by the second power; and to supply an enabling signal 12 to the signal transmission permitting means 7. The same configuration as depicted in the aforementioned example is not described herein.

In this example, the voltage detector 6 detects the presence of the regulated voltage 14 of the controller 5 to output an enabling signal 12, and accordingly does not output an enabling signal 12 when the second power is not supplied to the controller 5. That is, the second power is not supplied unless the voltage of the first power is applied across the switching device 4 or the stator 3 is energized. Therefore, the voltage detector 6 does not output an enabling signal 12 if the motor device 1 is in an standby state or the motor of the motor device 1 is not during operation.

Therefore, since both input of the first power and a control signal 11 are not superposed on the switching device 4, the burden, caused by an inrush current 15, of the switching device 4 is reduced. The voltage detector 6 detects the regulated voltage 14 of the controller 5 to which the second power is supplied, thereby reducing power consumption in comparison with an existing device configured to detect the voltage of first power.

In a modified example shown in FIG. 3, the signal transmission permitting means 7 is built in the controller 5. For example, a motor control IC is utilized as the controller 5, and a stop/start function built in the IC is utilized as the signal transmission permitting means 7. The same configuration as depicted in the aforementioned example is not described herein.

In this example, in addition to reduction of power consumption and reduction of the burden of the switching device 4, the controller 5 is integrally combined with the signal transmission permitting means 7. Therefore, the installation space of the signal transmission permitting means 7 can be reduced and a compact and inexpensive motor device 1 can be realized.

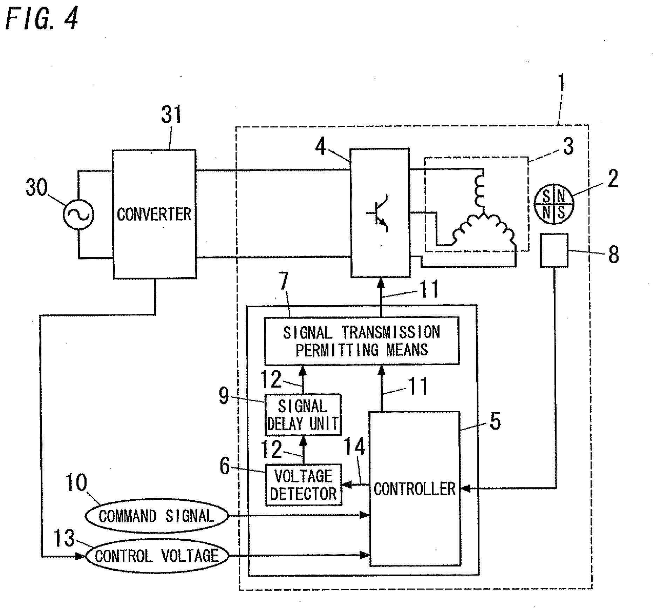

In an example shown in FIG. 4, the motor device 1 is provided with a signal delay unit 9 configured to delay transmission of an enabling signal 12. The signal delay unit 9 is added to the configuration of FIG. 2, and accordingly the same configuration as depicted in the example of FIG. 2 is not described herein.

The signal delay unit 9 is, for example, a CR circuit including a condenser and a resistor, and arranged between the voltage detector 6 and the signal transmission permitting means 7. The enabling signal 12 from the voltage detector 6 is transmitted to the signal transmission permitting means 7 through the signal delay unit 9. The signal delay unit 9 is configured to delay the transmission of the enabling signal 12 to the signal transmission permitting means 7 for a constant time S. The control signal 11 is transmitted to the switching device 4 after the elapse of the constant time S from the output of the enabling signal 12 from the voltage detector 6.

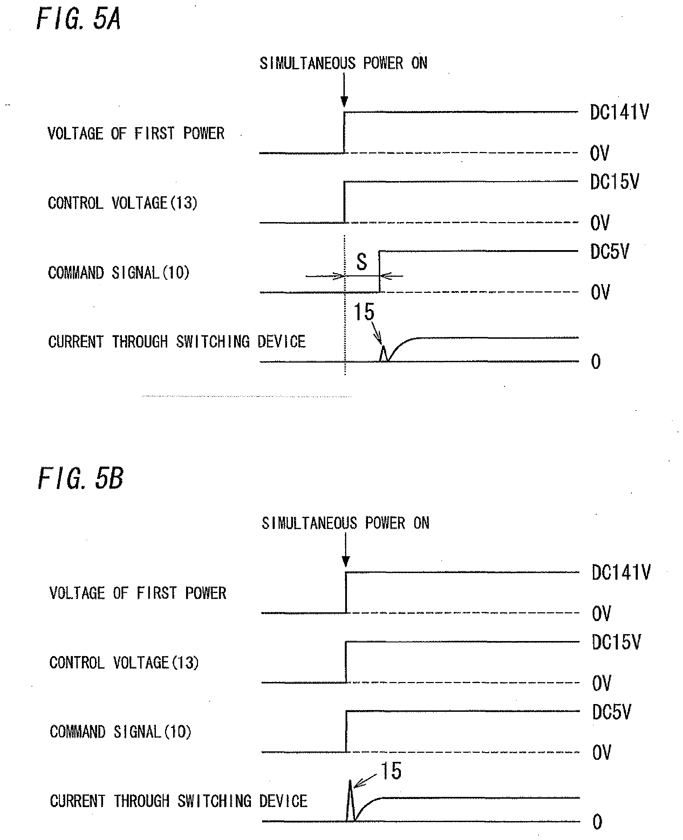

Therefore, as shown in FIG. 5A, the switching device 4 is supplied with a control signal 11 after the constant time S or more from the supply of the first power, without performing supply of the first power and the second power as well as supply of the control signal 11 almost at the same time even if turning on each power at the same time.

Specifically, even if the supply of the first power and the second power as well as the supply of the command signal 10 are performed almost at the same time, the signal delay unit 9 delays transmission of the enabling signal 12. Therefore, as shown in FIG. 5A, it is possible to reduce the increase of the inrush current 15 as shown in FIG. 5B by superposition of the supply of the first power and the supply of the control signal 11. The supply of the first power and the supply of the control signal 11 are not superposed on the switching device 4. Therefore, even if each power is turned on at the same time, an inrush current 15 when a control signal 11 is supplied can be reduced, and the burden of the switching device 4 can be reduced.

That is, by providing the signal delay unit 9, it is possible to reduce the burden of the switching device 4 and to improve convenience of the motor device 1 even when the first power and the second power are supplied at the same time.

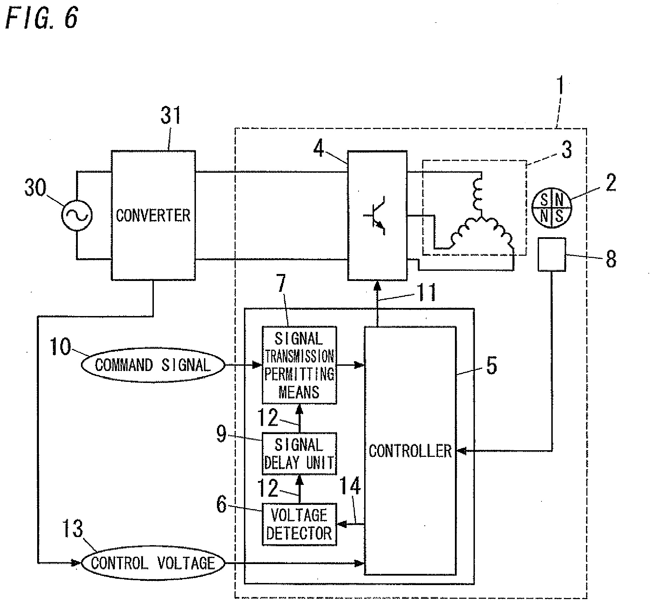

In another example including the signal delay unit 9 as shown in FIG. 6, the signal transmission permitting means 7 is arranged between an external command signal output means and the controller 5, while the signal delay unit 9 is arranged between the voltage detector 6 and the signal transmission permitting means 7. The same configuration as depicted in the aforementioned example is not described herein.

Specifically, the signal delay unit 9 delays the transmission of an enabling signal 12 from the voltage detector 6 for a constant time S to supply the signal to the signal transmission permitting means 7. The command signal 10 is not transmitted to the controller 5 until the signal transmission permitting means 7 permits.

Therefore, the constant time S is delayed from the supply of the second power, and the command signal 10 is then supplied to the controller 5. The controller 5 outputs a control signal 11 after the elapse of the constant time S from the output of the command signal 10 from the outside. That is, as shown in FIG 5A of the example of FIG. 4, even if the first power and the second power are supplied almost at the same time, the control signal 11 is supplied to the switching device 4 after the constant time S from the supply of the first power. Accordingly, the burden of the switching device 4 can be reduced.

The signal delay unit 9 may be arranged between the signal transmission permitting means 7 and the switching device 4 so as to stop and delay the transmission of a control signal 11, permitted by the signal transmission permitting means 7, to the switching device 4 for the constant time S.

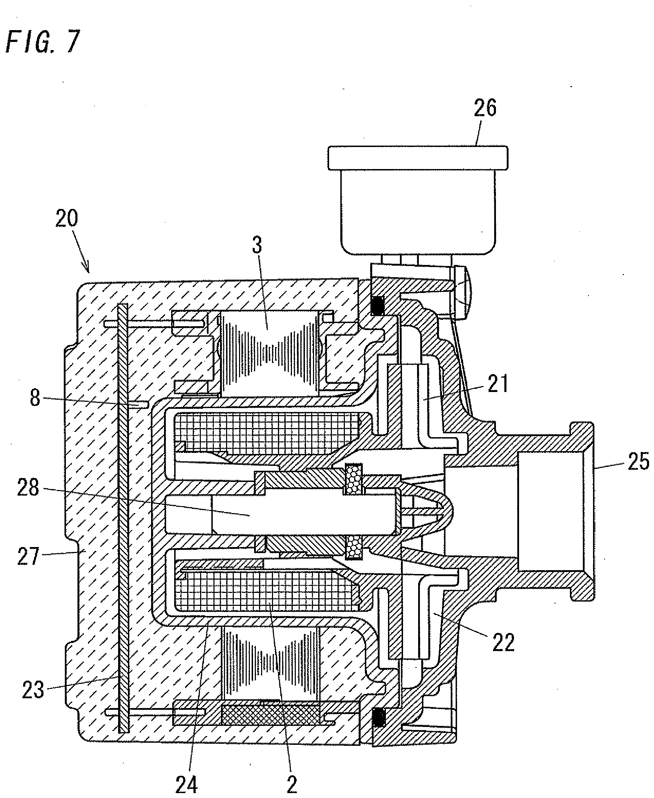

As shown in FIG. 7, it is preferable that the aforementioned motor device 1 configured to reduce power consumption and to reduce the burden of the switching device 4 is utilized as a drive source of an impeller 21 in a pump 20.

This pump 40 is, for example, a flow means for moving fluid such as: cooling fluid for a hybrid vehicle, a computer or the like; hot and cold water in a water supply system such as a shower, a faucet or the like; and mixed water including microscopic bubble from a microscopic bubble generating device installed in a bath.

Specifically, the pump 20 includes: a pump chamber 22 having the impeller 21; a motor device 1, as a drive source of the impeller 21, of which rotor 2 is put in the pump chamber 22; a circuit board 23 for controlling the pump 20; a separator (separating plate or member) 24 that is arranged between the rotor 2 and the stator 3 and separates the circuit board 23, the stator 3 and the like from the pump chamber 22.

The pump chamber 22 has an inlet 25 for drawing fluid into the pump chamber, and an outlet 26 for discharging the fluid from the pump chamber to the outside. The impeller 21, the rotor 2, and a rotation axis 28 as a rotation center of the rotor 2 and the impeller 21 are put in the pump chamber. The impeller 21 is integrally formed with the rotor 2. The impeller rotates around the rotation axis 28 by rotation drive of the rotor 2, thereby moving fluid by drawing fluid into the pump chamber from the inlet 25 while discharging the fluid in the pump chamber from the outlet 26.

The circuit board 23, the stator 3 and the like which are separated by the separator 24 are covered with mold resin 27. By the separator 24 and the mold resin 27, it is prevented the fluid from making contact with the circuit board 23, the stator 3 and the like. The circuit board 23 is electrically connected with the stator 3, and also supplied with power for driving and controlling the pump 20 from an external power supply 30 or the like. The circuit board controls the rotation of the motor device 1, thereby drawing and discharging fluid through the impeller 21.

The circuit board 23 is, for example, a circuit board on which a controller 5, a voltage detector 6, a signal transmission permitting means 7, a switching device 4 and a position detector 8 as shown in FIG. 1, 2 or 3 are mounted, or the circuit board on which a signal delay unit 9 as shown in FIG. 4 or 6 is additionally mounted.

Thus, since the circuit board 23 has the signal transmission permitting means 7, an inrush current 15 in the switching device 4 can be reduced and the burden of the switching device 4 can be reduced. The voltage detector 6 detects control voltage 13 or regulated voltage 14 of the controller 5, and accordingly power consumption can be reduced in comparison with a device configured to detect the voltage of first power.

The circuit board 23 may be a circuit board on which a converter 31 for dividing power from the external power supply 30 into first power and second power, a step-down unit configured to generate voltage of second power lower than that of first power, namely control voltage 13, or the like are mounted. The circuit board 23 may be combined with a command signal output means.

## Claims

1. A motor device (1), comprising:
a rotor (2);
a stator (3) configured to drive the rotor (2);
a switching device (4) to which a first power of an external power supply (30) is supplied, the switching device (4) being configured to energize the stator (3); and
a controller (5) configured to output a control signal (11) for performing energization control through the switching device (4) in accordance with a command signal (10) from the outside,
wherein power supply voltage of a second power of the external power supply (30), which is supplied to the controller (5), is lower than voltage of the first power supplied to the switching device (4),
wherein the motor device (1) is **characterized in that**
the first power and the second power constitute the power supplied from the external power supply (30),
a regulated voltage (14) is supplied from the controller (5), wherein the regulated voltage (14) is lower than voltage of the first power supplied to the switching device (4),
wherein the motor device (1) further comprises:
a voltage detector (6) configured to detect the regulated voltage (14); and
a signal transmission permitting means (7) configured to permit transmission of the control signal (11) to the switching device (4) when the regulated voltage (14) is detected through the voltage detector (6).

2. The motor device (1) of claim 1, wherein the signal transmission permitting means (7) is built in the controller (5).

3. The motor device (1) of claim 1 or 2,
wherein the voltage detector (6) is configured to supply an enabling signal (12) to the signal transmission permitting means (7) when detecting voltage,
wherein the motor device (1) further comprises a signal delay unit (9) configured to delay and transmit at least any one of the command signal (10), the control signal (11) and the enabling signal (12).

4. A pump (20) of any one of claims 1-3, comprising the motor device (1) as a drive source of an impeller (21).

## Patentansprüche

1. Motorvorrichtung (1), umfassend:
einen Rotor (2);
einen Stator (3), der zum Antreiben des Rotors (2) konfiguriert ist;
eine Schaltvorrichtung (4), der eine erste Leistung von einer externen Leistungsversorgung (30) zugeführt wird, wobei die Schaltvorrichtung (4) dazu konfiguriert ist, den Stator (3) mit Energie zu versorgen; und
eine Steuerung (5), die konfiguriert ist, ein Steuersignal (11) auszugeben, um mittels der Schaltvorrichtung (4) gemäß einem Befehlssignal (10) von außerhalbeine Energieversorgungssteuerung auszuführen,
wobei eine Leistungsversorgungsspannung einer zweiten Leistung von der externen Leistungsversorgung (30), die der Steuerung (5) zugeführt wird, niedriger als eine Spannung der ersten Leistung ist, welche der Schaltvorrichtung (4) zugeführt wird,
wobei die Motorvorrichtung (1) **dadurch gekennzeichnet ist, dass**
die erste Leistung und die zweite Leistung die Leistung bilden, die von der externen Leistungsversorgung (30) zugeführt wird,
eine geregelte Spannung (14) von der Steuerung (5) zugeführt wird, wobei die geregelte Spannung (14) niedriger als Spannung der ersten Leistung ist, die der Schaltvorrichtung (4) zugeführt wird,
wobei die Motorvorrichtung (1) ferner umfasst:
einen Spannungsdetektor (6), der zum Erkennen der geregelten Spannung (14) konfiguriert ist; und
ein Signalübertragungszulassungsmittel (7), das zum Zulassen von Übertragung des Steuersignals (11) an die Umschaltvorrichtung (4) konfiguriert ist, wenn die geregelte Spannung (14) durch den Spannungsdetektor (6) erkannt wird.

2. Motorvorrichtung (1) nach Anspruch 1, wobei das Signalübertragungszulassungsmittel (7) Teil der Steuerung (5) ist.

3. Motorvorrichtung (1) nach Anspruch 1 oder 2,
wobei der Spannungsdetektor (6) zum Zuführen eines Aktivierungssignals (12) zum Signalübertragungszulassungsmittel (7) konfiguriert ist, wenn er Spannung erkennt,
wobei die Motorvorrichtung (1) ferner eine Signalverzögerungseinheit (9) umfasst, die zum Verzögern und Übertragen von zumindest einem des Befehlssignals (10), des Steuersignals (11) und des Aktivierungssignals (12) konfiguriert ist.

4. Pumpe (20) nach einem der Ansprüche 1 bis 3, umfassend die Motorvorrichtung (1) als eine Antriebsquelle eines Pumpenrads (21).

## Revendications

1. Dispositif de moteur (1), comprenant :
un rotor (2) ;
un stator (3) configuré de manière à entraîner le rotor (2) ;
un dispositif de commutation (4) auquel est fournie une première puissance d'une alimentation électrique externe (30), le dispositif de commutation (4) étant configuré de manière à exciter le stator (3) ; et
un contrôleur (5) configuré de manière à fournir en sortie un signal de commande (11) pour mettre en œuvre une commande d'excitation par le biais du dispositif de commutation (4) conformément à un signal d'instruction (10) provenant de l'extérieur ;
dans lequel une tension d'alimentation électrique d'une seconde puissance de l'alimentation électrique externe (30), qui est fournie au contrôleur (5), est inférieure à la tension de la première puissance fournie au dispositif de commutation (4) ;
dans lequel le dispositif de moteur (1) est **caractérisé en ce que** :
la première puissance et la seconde puissance constituent la puissance fournie par l'alimentation électrique externe (30) ;
une tension régulée (14) est fournie par le contrôleur (5), dans lequel la tension régulée (14) est inférieure à la tension de la première puissance fournie au dispositif de commutation (4) ;
dans lequel le dispositif de moteur (1) comprend en outre :
un détecteur de tension (6) configuré de manière à détecter la tension régulée (14) ; et
un moyen de permission de transmission de signal (7) configuré de manière à permettre la transmission du signal de commande (11), au dispositif de commutation (4), lorsque la tension régulée (14) est détectée à travers le détecteur de tension (6).

2. Dispositif de moteur (1) selon la revendication 1, dans lequel le moyen de permission de transmission de signal (7) est intégré dans le contrôleur (5).

3. Dispositif de moteur (1) selon la revendication 1 ou 2,
dans lequel le détecteur de tension (6) est configuré de manière à fournir un signal d'activation (12) au moyen de permission de transmission de signal (7) lors de la détection de la tension ;
dans lequel le dispositif de moteur (1) comprend en outre une unité de retard de signal (9) configurée de manière à retarder et à transmettre au moins un signal quelconque parmi le signal d'instruction (10), le signal de commande (11) et le signal d'activation (12).

4. Pompe (20) selon l'une quelconque des revendications 1 à 3, comprenant le dispositif de moteur (1) en qualité de source d'entraînement d'une turbine (21).
